# EUROPEAN PATENT APPLICATION

(11) **EP 3 996 271 A1**
(43) Date of publication of application: **11.05.2022**
(21) Application number: 20382956.9
(22) Date of filing: 04.11.2020
(51) Int. Cl.: H02N 11/00

(54) **ELECTROMECHANICAL TRANSDUCER AND REMOTE ACTUATION SYSTEM**

(71) Applicant: Universitat Autònoma de Barcelona, 08193 Barcelona (ES)
(72) Inventor: ABADAL BERINI, Gabriel, 08193 Bellaterra (ES); RUIZ LOBATO, Raul, 08193 Bellaterra (ES); BONACHE ALBACETE, Jordi, 08193 Bellaterra (ES)
(74) Representative: Ponti & Partners, S.L.P

(57) **Abstract**

Electromechanical transducer for transducing electromagnetic radiation to mechanical displacement, comprising an antenna (1a, 1b, 1c, 1d, 1e) having an electrically conductive surface (121a, 121b, 121c, 121d, 121e) and a first electrically conductive body (11a, 11b, 11c, 11d, 11e) with a first movable portion (110a, 110b, 110c, 110d, 110e), the first movable portion (110a, 110b, 110c, 110d, 110e) and said electrically conductive surface (121a, 121b, 121c, 121d, 121e) being overlapped and spaced apart by a gap, as well as configured to generate and store electric charges in its surface when receiving an electromagnetic wave, the first movable portion (110a, 110b, 110c, 110d, 110e) being as well configured to undergo a mechanical displacement due to electrostatic forces between the first movable portion (110a, 110b, 110c, 110d, 110e) and the electrically conductive surface (121a, 121b, 121c, 121d, 121e) in response to the stored electric charges.

## Description

Electromechanical transducer and remote actuation system.

The present invention relates to an electromechanical transducer for direct transduction from electromagnetic domain to mechanical domain, particularly for capturing and converting the power of an electromagnetic wave into a mechanical actuation. Another aspect of the present invention relates to a remote actuation system comprising said electromechanical transducer.

### State of the art

Research on RF-MEMS (Radio Frequency - Micro Electromechanical System) for microwave systems and antenna applications has been extensively reported in the literature. These applications involve switching networks, low noise oscillators, amplifiers, tunable capacitors and reconfiguration of antennas, as disclosed by B. Mukherjee et al. in "Study on dynamic actuation in double microcantilever-based electrostatic microactuators with an in-house experimental set-up*".* In wireless communications, the use of MEMS switches has been reported for antenna reconfiguration, where the MEMS switch is a separate device, and as it is not an active part of the antenna, an electronic circuit is always needed to control the MEMS switch.

A well-known problem in electrostatic MEMS is the pull-in effect in the dynamic displacement of a cantilever beam. Most of the research in this field is aimed at solving this pull-in problem. The extension of the dynamic range of a microcantilever has been studied previously, for example, by J.M. Kyynarainen et al. in "Increasing the dynamic range of a micromechanical moving-plate capacitor*".* Many works have shown that this problem can be overcome by using an LC circuit for driving the microcantilever. As disclosed by S. Park et al. in "Design and Analysis of Resonant Drive Circuit for Electrostatic Actuators*",* a resonant driving circuit concept has been introduced for low voltage electrostatic actuation. In a different approach, as disclosed by F. Lakrad and M. Belhaq in "Suppression of pull-in instability in MEMS using a high-frequency actuation*",* a suppression of the pull-in instability can be achieved by using a high-frequency actuation.

However, there is no evidence found of an effective electrostatic actuator with no pull-in effect and no electronic control circuit.

### Description of the invention

A first object of the present invention is to provide an electromechanical transducer for transducing electromagnetic radiation to mechanical displacement. A second object of the present invention is to provide a remote actuation system comprising said electromechanical transducer.

In the following description, some elements or parameters may be indexed, such as a first element and a second element. Unless stated otherwise, indexation is only meant to differentiate and name elements which are similar but not identical. No idea of priority should be inferred from such indexation, as these terms may be switched without betraying the invention. Additionally, this indexation does not imply any order in mounting or use of the elements of the invention.

The present electromechanical transducer is characterized in that comprises an antenna having at least:
- an electrically conductive surface and
- a first electrically conductive body, which in turn comprises a first movable portion.

Said first movable portion and said electrically conductive surface are overlapped and spaced apart by a gap, as well as configured to generate and store electric charges in its surface when receiving an electromagnetic wave. Moreover, the first movable portion is configured to undergo a mechanical displacement due to electrostatic forces between the first movable portion and the electrically conductive surface in response to the stored electric charges.

Thanks to the present electromechanical transducer's configuration, the first movable portion acts as a mechanical actuator as well as a receiving antenna, the displacement of which is controllable by an electromagnetic wave. Moreover, the first movable portion and the electrically conductive surface together act as a wireless switch. Therefore, the present invention discloses an electromechanical transducer where the mechanical component is an active part of the receiving antenna, so any electric control circuit is avoided. Furthermore, the present electromechanical transducer does not suffer from pull-in effect, so the displacement of the first movable portion is controllable with no oscillation needed in the whole range.

In a first embodiment of the electromechanical transducer, the electrically conductive surface and the first electrically conductive body are located in different grounds. In a second embodiment, the electrically conductive surface is located at the ground where the first electrically conductive body is supported. In a third embodiment, said electrically conductive surface is comprised at a second movable portion, which in turn is comprised at a second electrically conductive body of the antenna. In this last embodiment, also the second movable portion acts as a mechanical actuator as well as a receiving antenna, the displacement of which is controllable together with the first movable portion by the electromagnetic wave.

The electrically conductive surface and the first movable portion preferably have a flat shape, but they could adopt any shape as long as they can comprise a gap between them. For example, the electrically conductive surface and/or the first movable portion consist on cantilevered beams. The preferred dimensions of any of said cantilevered beams are between 100 mm and 100 µm long, between 5 mm and 10 µm wide, and between 100 µm and 1 µm in thickness. More preferably, between 10 mm and 1 mm long, between 1 mm and 100 µm wide, and between 50 µm and 5 µm in thickness. In a possible embodiment, one or both cantilevered beams are defined as a folded cantilever, comprising two or more sections inclined to each other, each section comprising said preferred dimension. In this case, at least the last section of the first movable portion is preferably overlapped to at least the last section of the second movable portion, but this is not mandatory.

As another example of alternative embodiment, said first movable portion and/or said second movable portion consists on a cantilevered body, the width of which changes (increases or decreases) as the greater becomes the distance to the attached end, i.e. in a triangular shape.

The material of the electrically conductive surface and the first electrically conductive body can be any electrically conductive material. So, their electrical conductivity can be comprised between 1.5e-3 S/m (i.e. dopped Si) and 6.10⁷ S/m (i.e. Cu).

As the material of the electrically conductive surface and the first electrically conductive body can be any electrically conductive material, the material's density value of said first movable portion and/or said second movable portion can be comprised between 2330 kg/m³ (i.e Si) to 19300 kg/m³ (i.e Au). Likewise, the material's Young modulus value of said first movable portion and/or said second movable portion can be comprised between 70 GPa (i.e. aluminium) and 448 GPa (i.e. SiC).

In a possible embodiment, the electromechanical transducer can be operated in an oscillatory mode. In this case, the mechanical resonant frequency of said first movable portion and/or said second movable portion is higher than 10 Hz and lower than 100 kHz. Preferably, the mechanical resonant frequency of said first movable portion and/or said second movable portion is inside the audio spectrum, i.e. between 19 Hz and 19 kHz.

In relation to said gap between the electrically conductive surface and the first movable portion, it is preferably between 25 µm and 0,1 µm when the electrically conductive surface is not in a movable portion, and between 50 µm and 0,2 µm when the electrically conductive surface is in a movable portion. Even more preferably, the gap is between 5 µm and 1 µm when the electrically conductive surface is not in a movable portion, and between 10 µm and 2 µm when the electrically conductive surface is in a movable portion.

Regarding the present remote actuation system, it comprises any of the previously described electromechanical transducers' embodiments as well as an electromagnetic wave emitter. The electromagnetic wave emitter is configured to emit an electromagnetic wave with a wavelength in the range of 500 MHz and 750 GHz, whereas the length of the first movable portion and/or the electrically conductive surface of the electromechanical transducer is a fraction of the wavelength of said electromagnetic wave. Preferably, the length of said first movable portion and/or said electrically conductive surface is half the wavelength of said wave, in order to optimize the gain of the electromechanical transducer.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures.

### Brief description of the drawings

FIG. 1 shows an elevation illustration of a first embodiment of the present electromechanical transducer.
FIG. 2 shows an elevation illustration of a second embodiment of the present electromechanical transducer.
FIG. 3a shows an elevation illustration of a third embodiment of the present electromechanical transducer.
FIG. 3b shows a plan illustration of said third embodiment.
FIG. 4a shows an elevation illustration of a fourth embodiment of the present electromechanical transducer. FIG. 4b shows a plan illustration of said fourth embodiment.
FIG. 5 shows an elevation illustration of a fifth embodiment of the present electromechanical transducer.
FIG. 6 illustrates an exemplary embodiment of the present remote actuation system.

It must be noted that the figures disclose the invention in a detailed enough way to be implemented, said figures helping to better define the invention if needs be. The invention should however not be limited to the embodiment disclosed in the description.

### Description of preferred embodiments

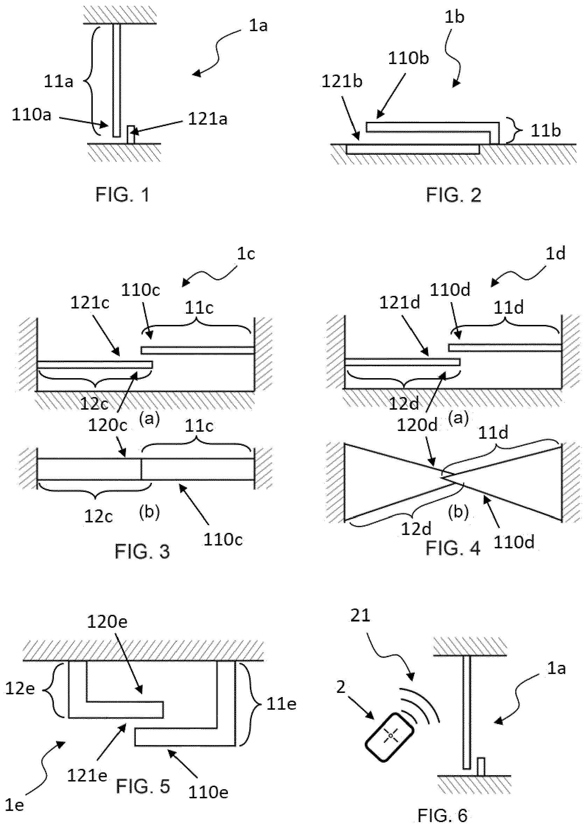

Example embodiments of said electromechanical transducer and said remote actuation system are described below, with reference to figures 1 to 6.

In regard to the first aspect, figures 1 to 5 schematically show different embodiments of the present electromechanical transducer, all of them comprising an antenna (1a, 1b, 1c, 1d, 1e) having:
- an electrically conductive surface (121a, 121b, 121c, 121d, 121e) and
- a first electrically conductive body (11a, 11b, 11c, 11d, 11e) with a first movable portion (110a, 110b, 110c, 110d, 110e).

Said first movable portion (110a, 110b, 110c, 110d, 110e) and said electrically conductive surface (121a, 121b, 121c, 121d, 121e) are overlapped and spaced apart by a gap, as well as configured to generate and store electric charges in their surface when receiving an electromagnetic wave. In addition, said first movable portion (110a, 110b, 110c, 110d, 110e) is configured to undergo a mechanical displacement due to electrostatic forces between the first movable portion (110a, 110b, 110c, 110d, 110e) and the electrically conductive surface (121a, 121b, 121c, 121d, 121e) in response to said stored electric charges.

In embodiments of figures 1 and 2, the electrically conductive surface (121a, 121b) is not meant to move. In figure 1, the first electrically conductive body (11a) consists on a cantilever and the electrically conductive surface (121a) is located in another cantilever, which is too short to be considered as movable. In figure 2, the first electrically conductive body (11b) consists on a folded cantilever and the electrically conductive surface (121b) consists on a part of the ground where the first electrically conductive body (11b) is supported.

In embodiments shown in figures 3 to 5, the antenna (1c, 1d, 1e) comprises a second electrically conductive body (12c, 12d, 12e) having a second movable portion (120c, 120d, 120e), which in turn comprises said electrically conductive surface (121c, 121d, 121e). Specifically, in figure 3, the first electrically conductive body (11c) and the second electrically conductive body (12c) consist on cantilever beams. In figure 4, the first electrically conductive body (11d) and the second electrically conductive body (12d) consist on cantilevered triangles, one of their sides being attached to the ground and the opposite vertex being the overlapped part. In figure 5, the first electrically conductive body (11e) and the second electrically conductive body (12e) consist on folded cantilevers with corresponding movable portions (110e, 120e) being overlapped.

In regard to the second aspect, figure 6 schematically shows an embodiment of the present remote actuation system, which comprises an electromagnetic wave emitter (2) and an electromechanical transducer (1a) as described previously as its first embodiment. The electromagnetic wave emitter (2) is configured to emit an electromagnetic wave (21) with a wavelength in the range of 500 MHz and 750 GHz, whereas the length of said first electrically conductive body (11a, 11b, 11c, 11d, 11e) is a fraction of the wavelength of said electromagnetic wave (21), preferably half of it. Although it is not illustrated, in other possible embodiments of the remote actuation system, the electromechanical transducer can comprise an electrically conductive surface whose length is also a fraction of the wavelength of said electromagnetic wave (21), preferably half of it.

In any case, the invention is not limited to the embodiments specifically described previously, as other embodiments might exist.

## Claims

1. Electromechanical transducer for transducing electromagnetic radiation to mechanical displacement, **characterized in that** comprises an antenna (1a, 1b, 1c, 1d, 1e) having:
- an electrically conductive surface (121a, 121b, 121c, 121d, 121e) and
- a first electrically conductive body (11a, 11b, 11c, 11d, 11e) with a first movable portion (110a, 110b, 110c, 110d, 110e),
the first movable portion (110a, 110b, 110c, 110d, 110e) and said electrically conductive surface (121a, 121b, 121c, 121d, 121e) being overlapped and spaced apart by a gap, as well as configured to generate and store electric charges in its surface when receiving an electromagnetic wave, the first movable portion (110a, 110b, 110c, 110d, 110e) being as well configured to undergo a mechanical displacement due to electrostatic forces between the first movable portion (110a, 110b, 110c, 110d, 110e) and the electrically conductive surface (121a, 121b, 121c, 121d, 121e) in response to the stored electric charges.

2. Electromechanical transducer according to claim 1, wherein said gap is between 25 µm and 0,1 µm.

3. Electromechanical transducer according to claim 1, wherein the antenna (1c, 1d, 1e) comprises a second electrically conductive body (12c, 12d, 12e) having a second movable portion (120c, 120d, 120e), which in turn comprises said electrically conductive surface (121c, 121d, 121e).

4. Electromechanical transducer according to claim 3, wherein said gap is between 50 µm and 0,2 µm.

5. Electromechanical transducer according to any of claims 1 to 4, wherein the mechanical resonant frequency of said first electrically conductive body (11a, 11b, 11c, 11d, 11e) and/or said second electrically conductive body (12c, 12d, 12e) is higher than 10 Hz and lower than 100 kHz.

6. Electromechanical transducer according to any of claims 1 to 5, wherein the mechanical resonant frequency of said first electrically conductive body (11a, 11b, 11c, 11d, 11e) and/or said second electrically conductive body (12c, 12d, 12e) is inside the audio spectrum.

7. Electromechanical transducer according to any of claims 1 to 6, wherein said first electrically conductive body (11a, 11c, 11d) and/or said second electrically conductive body (12c, 12d) consists on a cantilever, being between 100 mm and 100 µm long, between 5 mm and 10 µm wide, and between 100 um and 1 µm in thickness.

8. Electromechanical transducer according to any of claims 1 to 7, wherein said first electrically conductive body (11d) and/or said second electrically conductive body (12d) consists on a cantilevered body, the width of which changes as the greater becomes the distance to the attached end.

9. Electromechanical transducer according to any of claims 1 to 8, wherein said first electrically conductive body (11b, 11e) and/or said second electrically conductive body (12e) consists on a folded cantilever, comprising two or more sections inclined to each other, and the last section of their corresponding movable portions (110b, 110e, 120e) being overlapped.

10. Remote actuation system comprising an electromagnetic wave emitter (2) and an electromechanical transducer (1a, 1b, 1c, 1d , 1e) described according to any of claims 1 to 12, wherein the electromagnetic wave emitter (2) is configured to emit an electromagnetic wave (21) with a wavelength in the range of 500 MHz and 750 GHz, and the length of said first electrically conductive body (11a, 11b, 11c, 11d, 11e) is a fraction of the wavelength of said electromagnetic wave (21).

11. Remote actuation system according to claim 10, wherein the length of said first electrically conductive body (11a, 11b, 11c, 11d, 11e) is half the wavelength of said wave (21).

12. Remote actuation system according to claim 10 or 11, wherein the length of said electrically conductive surface (121a, 121b, 121c, 121d, 121e) is a fraction of the wavelength of said electromagnetic wave (21).

13. Remote actuation system according to claim 12, wherein the length of said electrically conductive surface (121a, 121b, 121c, 121d, 121e) is half the wavelength of said wave (21).
